# EUROPÄISCHE PATENTSCHRIFT

(11) **EP 1 458 800 B1**
(45) Veröffentlichungstag und Bekanntmachung des Hinweises auf die Patenterteilung: **22.02.2006**
(21) Anmeldenummer: 02798334.5
(22) Anmeldetag: 13.12.2002
(51) Int. Cl.: C08K 5/00, C08K 5/134, C08K 5/315, C08K 5/3435

(54) **STABILISATORZUSAMMENSETZUNG II**
STABILISING COMPOSITION II
COMPOSITION STABILISATRICE II

(30) Priorität: 14.12.2001 DE 10161864
(43) Veröffentlichungstag der Anmeldung: 22.09.2004
(73) Patentinhaber: BASF Aktiengesellschaft, 67056 Ludwigshafen (DE)
(72) Erfinder: HEIDENFELDER, Thomas, 67125 Dannstadt (DE); APPEL, Manfred, 67857 Dernbach (DE)
(74) Vertreter: Reitstötter - Kinzebach
(86) Internationale Anmeldenummer: PCT/EP2002/014234
(87) Internationale Veröffentlichungsnummer: WO 2003/051972

(56) Entgegenhaltungen:
- US-A- 4 524 165
- US-A- 5 869 565
- ANDREWS, S. M.; CLAUSS, M,; MICHAELIS, P.: "Stabilization strategies for weatherable PU" RUBBER WORLD, Bd. 216, Nr. 1, 1997, Seiten 22-24, XP009008916

## Beschreibung

Die vorliegende Erfindung betrifft die Verwendung einer Stabilisatorzusammensetzung zur Stabilisierung von unbelebtem organischen Material gegen die Einwirkung von Licht, Sauerstoff und Wärme.

Die mechanischen, chemischen und/oder ästhetischen Eigenschaften von unbelebtem organischen Material, insbesondere Kunststoffen und Lacken, werden bekanntermaßen durch die Einwirkung von Licht, Sauerstoff und Wärme verschlechtert. Diese Verschlechterung zeigt sich üblicherweise als Vergilbung, Verfärbung, Rissbildung oder Versprödung des Materials. Mit Stabilisatoren oder Stabilisatorzusammensetzungen soll ein zufriedenstellender Schutz gegen die Beeinträchtigung von organischem Material durch Licht, Sauerstoff und Wärme erzielt werden.

Die US 5,917,080 beschreibt 2-Cyano-3,3-diphenylacrylsäureester als wirksame Lichtstabilisatoren für Kunststoffe und kosmetische Produkte.

Die EP 0 263 524 betrifft ein Stabilisatorgemisch aus Chromanderivaten, organischen Phosphiten oder Phosphoniten zur Stabilisierung von Kunststoffen, wobei das Stabilisatorgemisch gegebenenfalls noch weitere Stabilisatoren enthalten kann.

Die DE-A-4405670 betrifft ein Stabilisatorgemisch aus Chromanderivaten, organischen Phosphiten oder Phosphoniten und Aminen zur Stabilisierung von organischem Material.

Die DE 199 48 117 offenbart eine Stabilisatorzusammensetzung, die einen 3-Arylacrylsäureester, ein sterisch gehindertes Amin, ein Chromanderivat, ein organisches Phosphit und/oder Phosphonit enthält.

Unbefriedigend ist bei derartigen Stabilisatoren oder Stabilisatorenzusammensetzungen häufig noch die geringe Verträglichkeit mit Kunststoffen sowie die geringe Dauer der Schutzwirkung. Außerdem zeigen die mit den bekannten Stabilisatorzusammensetzungen behandelten Kunststoffe keine zufriedenstellende Farb- und Glanzwahrung.

Der vorliegenden Erfindung liegt die Aufgabe zugrunde, eine Stabilisatorzusammensetzung anzugeben, die eine langanhaltende Schutzwirkung, insbesondere bezüglich des Farb- und Glanzerhaltes, gegen die Einwirkung von Licht, Sauerstoff und Wärme bietet. Die Stabilisatorzusammensetzung soll wirksam zur Stabilisierung von Polyurethanen sein.

Erfindungsgemäß wird diese Aufgabe durch die Verwendung einer Stabilisatorzusammensetzung gelöst, die umfasst
A) wenigstens einen 2-Cyan-3,3-diarylacrylsäureester der allgemeinen Formel I, 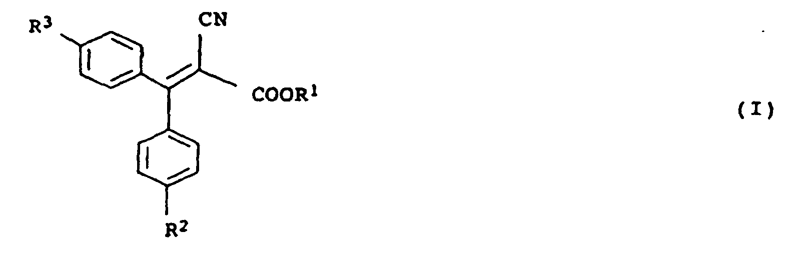
   worin
   - R¹: für C₁- bis C₁₈-Alkyl, das gegebenenfalls durch ein oder mehrere Sauerstoffatome unterbrochen sein kann, oder C₃-C₈-Cycloalkyl, gegebenenfalls substituiert, steht und
   - R² und R³: unabhängig voneinander für Wasserstoff, C₁-C₁₂-Alkyl, C₁-C₁₂-Alkoxy oder Di(C₁-C₄-alkylamino) stehen,
B) wenigstens ein Amin der allgemeinen Formel II, 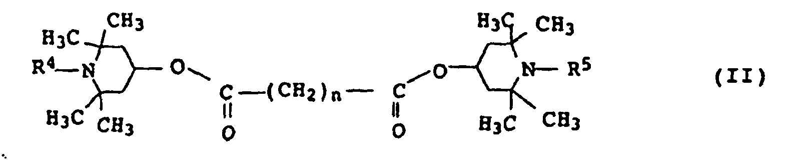
   worin
   - R⁴ und R⁵: unabhängig voneinander für Wasserstoff, C₁-C₄-Alkyl, C₁-C₁₂-Alkoxy stehen und
   - n: für eine ganze Zahl von 2 bis 10 steht,
C) wenigstens ein Phenol der Formel III, 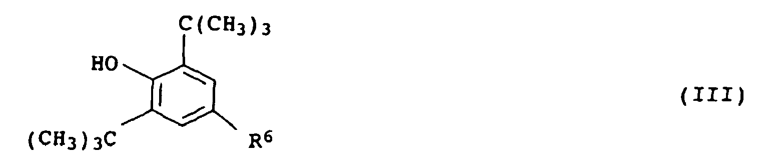
   worin
   - R⁶: für C₁-C₂₀-Alkoxycarbonyl-C₁-C₆-alkyl steht,
D) gegebenenfalls wenigstens ein Chromanderivat der Formel IV, 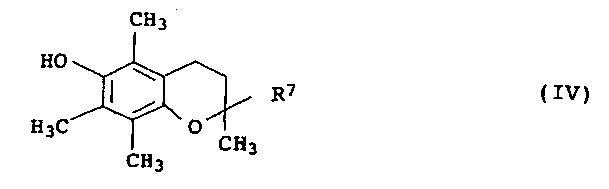
   worin R⁷ für eine Gruppe der Formel 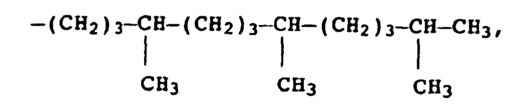 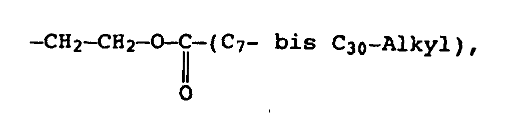
   -CH₂CH₂-S-(C₁- bis C₃₀-Alkyl) oder 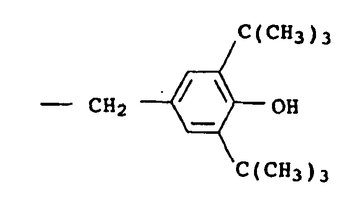
   steht, und
E) gegebenenfalls wenigstens ein organisches Phosphit und/oder Phosphonit.

Die erfindungsgemäß verwendete Stabilisatorzusammensetzung liegt bei Raumtemperatur im Allgemeinen als viskose Flüssigkeit vor und kann daher leicht in das zu stabilisierende Material eingearbeitet und homogen verteilt werden.

Es wurde ferner gefunden, dass die Schutzwirkung der erfindungsgemäß verwendeten Stabilisatorzusammensetzung gegen die Einwirkung von Licht, Sauerstoff und Wärme höher ist, als nach den Beiträgen der Komponenten der Stabilisatorzusammensetzung zu erwarten ist. Die ausgeprägte Schutzwirkung der erfindungsgemäß verwendeten Stabilisatorzusammensetzung beruht demnach auf einem synergistischen Effekt der Komponenten.

Die erfindungsgemäß verwendete Stabilisatorzusammensetzung umfasst als Komponente A) einen 2-Cyan-3,3-diarylacrylsäureester der allgemeinen Formel I, 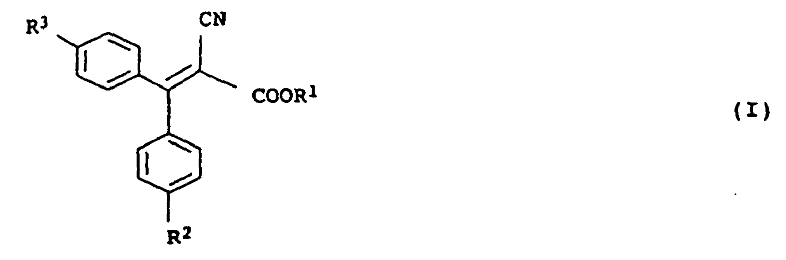
worin
- R¹: für C₁- bis C₁₈-Alkyl, vorzugsweise C₄- bis C₁₉-Alkyl, das gegebenenfalls durch ein oder mehrere Sauerstoffatome unterbrochen sein kann, oder C₃-C₈-Cycloalkyl, gegebenenfalls substituiert, steht und
- R² und R³: unabhängig voneinander für Wasserstoff, C₁-C₁₂-Alkyl, C₁-C₁₂-Alkoxy oder Di(C₁-C₄-alkylamino) stehen.

In der Formel I kann R¹ für eine geradkettige oder verzweigte C₁-C₁₈-Alkylgruppe, wie Methyl, Ethyl, n-Propyl, iso-Propyl, n-Butyl, sec-Butyl, Isobutyl, tert.-Butyl, n-Pentyl, iso-Pentyl, sec-Pentyl, tert.-Pentyl, neo-Pentyl, n-Hexyl, n-Reptyl, n-Octyl, 2-Ethylhexyl, n-Nonyl, iso-Nonyl, n-Decyl, n-Undecyl, n-Dodecyl, n-Tridecyl, iso-Tridecyl, n-Tetradecyl, n-Hexadecyl, n-Octadecyl stehen. Hiervon sind 2-Ethylhexyl und n-Octyl besonders bevorzugt. Weiterhin steht R¹ bevorzugt für Polyoxyethylenradikale wie -CH₂-CH₂-O-CH₂CH₃, -CH₂-CH₂-O-CH₂-CH₂-O-CH₂CH₃ sowie längerkettige Homologe.

Weiterhin kann R¹ für C₃-C₈-Cycloalkyl wie Cyclopropyl, Cyclobutyl, Cyclopentyl, Cyclohexyl, Cycloheptyl oder Cyclooctyl stehen. Bevorzugt sind C₅-C₈-Cycloalkyl wie Cyclopentyl, Cyclohexyl, Cycloheptyl und Cyclooctyl, insbesondere Cyclopentyl und Cyclohexyl.

R¹ kann gegebenenfalls mit einem, zwei oder drei Resten, die unter Halogen, z. B. Fluor, Chlor oder Brom, Cyano, Nitro, Amino, C₁-C₄₋Alkylamino, C₁-C₄-Dialkylamino, Hydroxy, C₁-C₄-Alkyl oder C₁-C₄-Alkoxy ausgewählt sind, substituiert sein.

Vorzugsweise bedeuten R² und R³ unabhängig voneinander Wasserstoff, C₁-C₄-Alkyl, C₁-C₄-Alkoxy oder Di(C₁-C₄-alkyl)amino, besonders bevorzugt Methyl, Ethyl, Methoxy, Ethoxy oder Dimethylamino, insbesondere Wasserstoff.

Als 2-Cyan-3,3-diarylacrylsäureester der allgemeinen Formel I ist 2-Ethylhexyl-2-cyan-3,3-diphenylacrylat besonders bevorzugt.

Die erfindungsgemäß verwendete Stabilisatorzusammensetzung enthält als Komponente B) wenigstens ein sterisch gehindertes monomeres Amin. Sterisch gehinderte Amine (Hindered Amine Light Stabilizers; HALS) sind bekannte Stabilistoren gegen photolytische und thermische Zersetzung von Kunststoffen. Hierzu eignen sich Amine der allgemeinen Formel II, 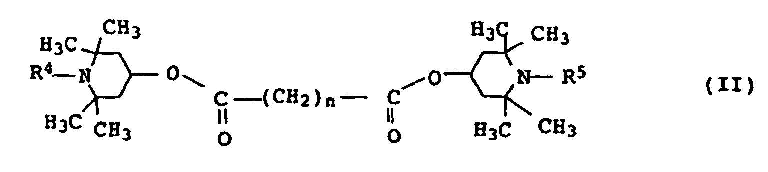
worin
- R⁴ und R⁵: unabhängig voneinander für Wasserstoff, C₁-C₄-Alkyl, C₁-C₁₂-Alkoxy stehen und
- n: für eine ganze Zahl von 2 bis 10, vorzugsweise 2 bis 8, insbesondere für 8, steht.

R⁴ und R⁵ stehen jeweils für Wasserstoff, eine geradkettige oder verzweigte C₁-C₄-Alkylgruppe, wie Methyl, Ethyl, n-Propyl, iso-Propyl, n-Butyl, iso-Butyl, sec-Butyl, tert. Butyl, oder für eine geradkettige oder verzweigte C₁-C₁₂-Alkoxygruppe wie Methoxy, Ethoxy, n-Propoxy, iso-Propoxy, n-Butoxy, iso-Butoxy, sec.-Butoxy, tert.-Butoxy, n-Pentyloxy, n-Hexyloxy, iso-Hexyloxy, n-Octyloxy, 2-Ethylhexyloxy, iso-Octyloxy, n-Nonyloxy, n-Decyloxy, n-Undecyloxy und n-Dodecyloxy. Hiervon sind Wasserstoff, Methyl und die isomeren Octyloxygruppen besonders bevorzugt.

Die als Komponente B einsetzbaren Verbindungen können flüssige oder kristalline Produkte sein. Es eignen sich vor allem Bis-(1,2,2,6,6-pentamethylpiperidin-4-yl)sebacat, das im Handel unter dem Namen Lowilite® 76 der Fa. Great Lakes erhältlich ist, Bis-(2,2,6,6-tetramethylpiperidin-4-yl)sebacat, das im Handel unter dem Namen Lowilite® 77 der Fa. Great Lakes erhältlich ist, Bis-(2,2,6,6-tetramethylpiperidin-4-yl)succinat, das im Handel unter dem Namen Tinuvin® 780 FF der Fa. Ciba-Geigy erhältlich ist, oder Bis(1-octyloxy-2,2,6,6-tetramethylpiperidin-4-yl)sebacat, das im Handel unter dem Namen Tinuvin® 123 der Fa. Ciba-Geigy erhältlich ist. Insbesondere verwendet man sterisch gehinderte monomere Amine, die bei Raumtemperatur oder unterhalb von 100°C im flüssigen Aggregatzustand vorliegen, wie Bis-(1,2,2,6,6-pentamethylpiperidin-4-yl)sebacat.

Die erfindungsgemäß verwendete Stabilisatorzusammensetzung enthält als Komponente C) wenigstens ein Phenol der Formel III, 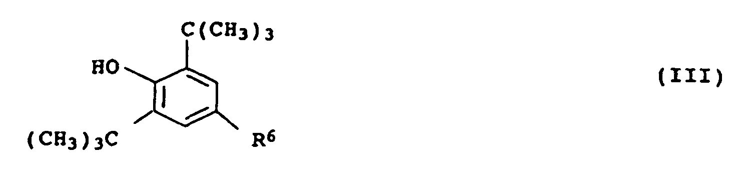
worin
- R⁶: für C₁-C₂₀-Alkoxycarbonyl-C₁-C₆-alkyl, vorzugsweise C₁-C₂₀-Alkoxycarbonyl-C₁-C₄-alkyl steht.

Hierzu eignen sich insbesondere (3,5-Di-tert.-butyl-4-hydroxyphenyl)propionsäureester von C₁-C₂₀-Alkanolen wie 3-(3,5-Di-tert.-butyl-4-hydroxyphenyl)propionsäure-i-octylester, das im Handel unter dem Namen Irganox® 1135 der Fa. Ciba-Geigy erhältlich ist, 3-(3,5-Di-tert.-butyl-4-hydroxyphenyl)propionsäure-n-octadecylester, das im Handel unter dem Namen Irganox® 1076 der Fa. Ciba-Geigy erhältlich ist.

Wahlweise enthält die erfindungsgemäß verwendete Stabilisatorzusammensetzung als Komponente D) zusätzlich wenigstens ein Chromanderivat der Formel IV, 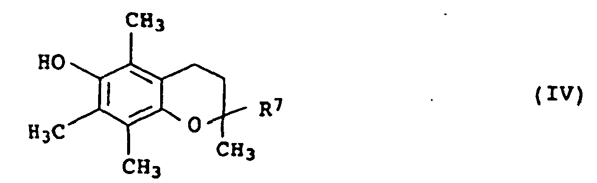
worin R⁷ für eine Gruppe der Formel 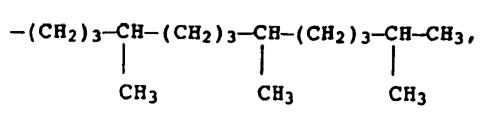 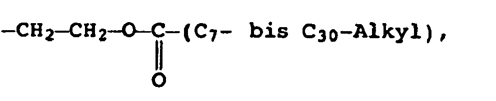
-CH₂CH₂-S-(C₁- bis C₃₀-Alkyl) oder 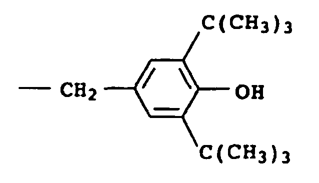
steht.

Hierzu eignen sich vor allem 2,5,7,8-Tetramethyl-2-(2'-stearoyloxy-ethyl)chroman (R⁷= -CH₂CH₂-O-CO-C₁₇H₃₅) und insbesondere α-Tocopherole, vorzugsweise DL-α-Tocopherol (R⁷ = -(CH₂)₃-CH(CH₃)-(CH₂)₃-CH(CH₃)-(CH₂)₃-C(CH₃)₂).

Wahlweise enthält die erfindungsgemäß verwendete Stabilisatorzusammensetzung als Komponente E) zusätzlich ein organisches Phosphit und/oder Phosphonit.

Hierzu sind insbesondere organische Phosphite der allgemeinen Formel V, 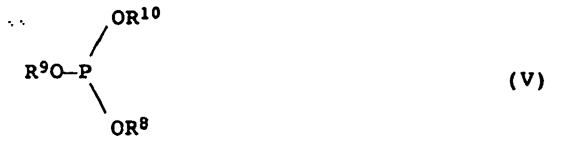
in der die Reste R⁸ bis R¹⁰ jeweils für C₂- bis C₁₂-Alkyl, vorzugsweise C₆- bis C₁₁-Alkyl, insbesondere C₈- bis C₁₀-Alkyl, oder C₆- bis C₁₈-Aryl, vorzugsweise Phenyl, welches durch C₁- bis C₁₈-Alkylgruppen, vorzugsweise ein bis drei C₄- bis C₁₂-Alkylgruppen, substituiert sein kann, bezeichnen,
oder ein organisches Phosphonit der Formel VI, 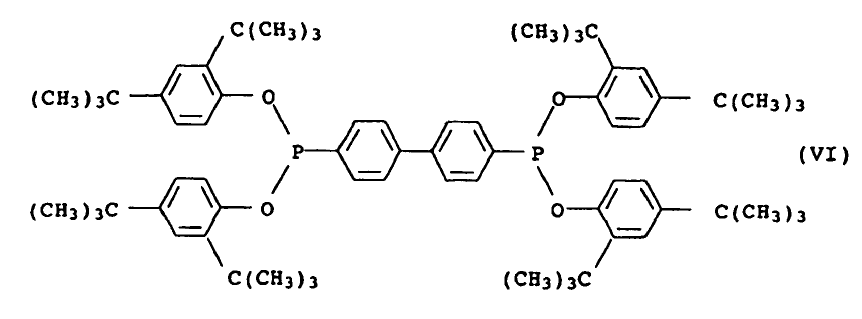
oder Mischungen aus den Phosphiten V und dem Phosphonit VI geeignet.

Die erfindungsgemäß einsetzbaren Phosphite und Phosphonite können sowohl flüssig wie auch kristallin sein. Als Beispiele für Phosphite der Formel V sind zu nennen:
- Trisalkylphosphite mit bevorzugt langkettigen linearen oder verzweigten Alkylgruppen wie Octyl-, Nonyl-, Isononyl-, Decyl- oder Isodecylgruppen; vorzugsweise Tris(nonylphenyl)phosphit.
- Triarylphosphite mit unsubstituierten oder ein- bis dreifach alkylsubstituierten Arylgruppen wie Phenyl-, Nonylphenyl- oder 2,4-Di-tert.-butylphenylgruppen;
- gemischte Arylalkylphosphite, wie Diisodecylphenylphosphit oder Diphenylpentaerythritdiphosphit.

Das Phosphonit der Formel VI ist im Handel unter dem Namen Irgafos®P-EPQ der Fa. Ciba-Geigy erhältlich.

In einer besonders bevorzugten Ausführungsform enthält die erfindungsgemäß verwendete Stabilisatorzusammensetzung die fakultativen Komponenten D) und E). Vorzugsweise liegt das Mischungsverhältnis von D):E) im Bereich von 1:5 bis 1:14, vorzusweise 1:7 bis 1:12.

Wahlweise enthält die erfindungsgemäß verwendete Stabilisatorzusammensetzung zusätzlich wenigstens einen weiteren Lichtstabilisator, der Lichtstrahlung im UV-A- (320 bis 400 nm) und/oder UV-B-Bereich (280 bis 320 nm) absorbiert. Selbstverständlich müssen die zusätzlichen Lichtstabilisatoren mit der Stabilisatorzusammensetzung kompatibel und vorzugsweise im sichtbaren Bereich farblos sein. Als Beispiele für derartige UV-Absorber seien genannt: 2-Hydroxybenzophenone, 2-Hydroxyphenylbenzotriazole, Oxalsäuredianilide, 2-Hydroxyphenyltriazine, 4,4'-Diarylbutadiene.

Geeignete 2-Hydroxybenzophenone, von denen eine Vielzahl im Handel erhältlich sind, sind beispielsweise: 2-Hydroxy-4-methoxybenzophenon, 2,4-Dihydroxybenzophenon, 2-Hydroxy-4-dodecoxybenzophenon, 2,2'-Dihydroxy-4-methoxybenzophenon (Handelsname Cyasorb® UV 24, American Cyanamid), 2,2'-Dihydroxy-4,4'-dimethoxybenzophenon, 2,2',4,4'-Tetrahydroxybenzophenon. Die 2-Hydroxybenzophenone zeichnen sich durch eine gute UV-Beständigkeit und ein hohes Absorptionsvermögen aus.

Geeignete 2-Hydroxyphenylbenzotriazole sind beispielsweise 2-(2'-Hydroxy-5'-methylphenyl)benzotriazol (Handelsname Tinuvin® P, Ciba-Geigy), 2-(2'-Hydroxy-5'-tert.-octylphenyl)benzotriazol (Handelsname Cyasorb® UV 5411), 2-(2'-Hydroxy-3'-tert.-butyl-5'-methylphenyl)benzotriazol (Handelsname Tinuvin® 326, Ciba-Geigy), 2-(2'-Hydroxy-3',5'-di-tert.-butylphenyl)5-chlorbenzotriazol (Handelsname Tinuvin® 327, Ciba-Geigy). 2-Hydroxyphenylbenzotriazole absorbieren an der Grenze zum sichtbaren Bereich und zeigen keine Gelbfärbung.

Ein geeignetes 2-Hydroxyphenyltriazin ist beispielsweise 2,4-Bis-(2', 2'',4',4''-tetramethylphenyl)-6-(2'"-hydroxy-4'''-octyloxyphenyl)-1,3,5-triazin (Handelsname Cyasorb® 1164, American Cyanamid).

Bevorzugte Oxalsäuredianilide sind beispielsweise: 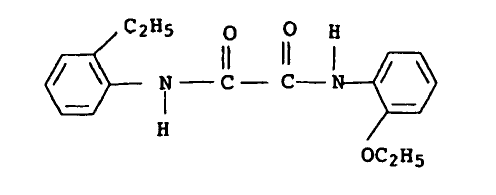 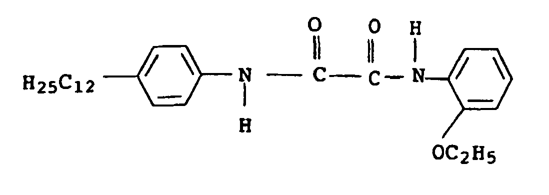
4,4'-Diarylbutadiene der Formel VII 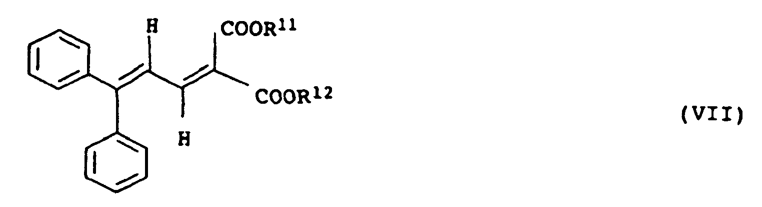
sind aus EPA 916 335 bekannt. Die Substituenten R¹¹ und/oder R¹² bedeuten bevorzugt C₁-C₈-Alkyl und C₅-C₈-Cycloalkyl.

Je nach Anwendungzweck kann die Stabilisatorzusammensetzung unterschiedliche Gestalt aufweisen. Der Gehalt an Komponente B) kann bis zu 50 Gew.-% betragen. Sofern die Stabilisatorzusammensetzung nicht die fakultativen Komponenten D und E enthält, umfasst sie im Allgemeinen:
45 bis 70 Gewichtsteile, vorzugsweise 55 bis 65 Gewichtsteile A),
20 bis 50 Gewichtsteile, vorzugsweise 25 bis 35 Gewichtsteile B) und
5 bis 15 Gewichtsteile, vorzugsweise 7 bis 12 Gewichtsteile C).

Bei Mitverwendung der Komponenten D) und E) enthält die erfindungsgemäß verwendete Stabilisatorzusammensetzung im Allgemeinen:
30 bis 50 Gewichtsteile, vorzugsweise 35 bis 45 Gewichtsteile A),
30 bis 50 Gewichtsteile, vorzugsweise 35 bis 45 Gewichtsteile B),
5 bis 15 Gewichtsteile, vorzugsweise 7 bis 12 Gewichtsteile C),
0,5 bis 1,5 Gewichtsteile, vorzugsweise 0,7 bis 1,2 Gewichtsteile D) und
5 bis 15 Gewichtsteile, vorzugsweise 7 bis 15 Gewichtsteile E).

Wird ein weiterer Lichtstabilisator mitverwendet, so wird er vorzugsweise in einer Menge von 0,1 bis 15, vorzugsweise 1 bis 12, Gewichtsteilen, bezogen auf das Gesamtgewicht der Stabilisatorzusammensetzung mitverwendet.

Die erfindungsgemäß verwendete Stabilisatorzusammensetzung wird dem zu stabilisierenden organischen Material in der Regel in einer Konzentration von 0,01 bis 5 Gew.-%, vorzugsweise von 0,01 bis 2 Gew.-%, insbesondere von 0,05 bis 1 Gew.-%, bezogen auf das organische Material vor, während oder nach seiner Herstellung zugesetzt.

Die erfindungsgemäß verwendete Stabilisatorzusammensetzung ist geeignet zur Stabilisierung von Polyurethanen, insbesondere thermoplastischen Polyurethanen. Dabei handelt es sich um überwiegend lineare Polyurethane, die, ausgehend von Diisocyanaten, wie 4,4'-Diisocyanato-diphenylmethan, und langkettigen Diolen, wie Polytetrahydrofuran oder Polyesterpolyolen, erhalten werden. Man geht in der Regel von entsprechenden Präpolymeren aus und setzt kurzkettige Diole oder Diamine als Kettenverlängerer ein; die erhaltenen Produkte sind segmentiert aufgebaut, wobei die Weichsegmente z. B. Molmassen von 1 000 bis 3 000 aufweisen und durch die Hartsegmente physikalisch vernetzt sind.

Die erfindungsgemäß verwendete Stabilisatorzusammensetzung kann auch in Form eines Masterbatches, der diese beispielsweise in einer Konzentration von 2,5 bis 25 Gew.-% enthält, hergestellt und den zu stabilisierenden Materialien zugesetzt werden.

Die unter Verwendung der erfindungsgemäßen Stabilisatorzusammensetzung stabilisierten Materialien zeigen besondere Qualitätsmerkmale bezüglich Farbänderung und Glanzhaltung gegenüber den mit der Vergleichszusammensetzung stabilisierten Materialien, d. h. ihre Schädigung durch äußere Einflüsse setzt später ein. Glanz und Farbe sollten möglichst während der gesamten Nutzungsdauer konstant bleiben und ihr Verlust bedeutet stets einen Qualitätsverlust. Die erfindungsgemäß stabilisierten Materialien zeichnen sich somit durch eine verlängerte Beanspruchungszeit aus.

Die Erfindung wird durch die folgenden Beispiele näher veranschaulicht.

### I. Beschreibung der Testmethoden

### 1. Bestimmung des Glanzgrades nach Gardner

Die Glanzmessung erfolgte mit einem Reflektometer Gardner Micro-Gloss 60° nach DIN 67530.

### 2. Bestimmung der Farbabweichung

Vor und nach der Bewitterung wurden die CIELAB-Farbunterschiede ΔE für jede Probe aus den Tristimulus-Werten mit Hilfe der Farbabstandsformel berechnet. Die CIE-Tristimulus-Werte X, Y und Z der Proben wurden mit dem Farbmessgerät DataColor, Datacolor, ermittelt.

### II. Beispiele

### Beispiel 1

Es wurde eine Stabilisatorzusammensetzung 1 hergestellt aus:
- 60: Gewichtsteilen 2-Cyan-3,3-diphenylacrylsäure-2-ethylhexylester,
- 30: Gewichtsteilen Bis-(1,2,2,6,6-pentamethylpiperidin-4-yl)-sebacat und
- 10: Gewichtsteilen 3-(3,5-Di-tert.-butyl-4-hydroxyphenyl)propionsäure-i-octylester.

### Beispiel 2

Es wurde eine Stabilisatorzusammensetzung 2 hergestellt aus:
- 40: Gewichtsteilen 2-Cyan-3,3-diphenylacrylsäure-2-ethylhexylester,
- 40: Gewichtsteilen Bis-(1,2,2,6,6-pentamethylpiperidin-4-yl)sebacat,
- 10: Gewichtsteilen 3-(3,5-Di-tert.-butyl-4-hydroxyphenyl)propionsäure-i-octylester und
- 10: Gewichtsteilen eines Gemisches aus 1 Gewichtsteil α-Tocopherol und 10 Gewichtsteilen Tris(nonylphenyl)phosphit.

Als Vergleich diente eine handelsübliche Stabilisatorzusammensetzung der folgenden Zusammensetzung:
- 60: Gewichtsteile 2-Ethylhexyl-p-methoxycinnamat,
- 20: Gewichtsteile Bis(1,2,2,6,6-pentamethylpiperidin-4-yl)sebacat und
- 20: Gewichtsteile eines Gemisches aus 1 Gewichtsteil α-Tocopherol und 10 Gewichtsteilen Tris(nonylphenyl)phosphit.

### III. Prüfung der Stabilisatorwirkung

Der Stabilisator wurde in eine TPU-Reaktion zugegeben, wobei die Muster über einen Gießansatz hergestellt wurden.

In eine Probe wurden 1 Gew.-% der Stabilisatorzusammensetzung nach Beispiel 1, in eine weitere Probe 1 Gew.-% der Stabilisatorzusammensetzung nach Beispiel 2 eingearbeitet. Zum Vergleich diente eine Probe, in die 1 Gew.-% der Stabilisatorzusammensetzung aus dem Vergleichsbeispiel eingearbeitet wurde. Da bei der unstabilisierten Probe unter den Testbedingungen eine rasche Vergilbung auftrat, konnte eine Kontrolle mit der unstabilisierten Probe nicht durchgeführt werden.

Prüfkörper wurden mit einem Schnellbewetterungsgerät des Typs Weather-Ometer® der Firma Atlas Materials Testing Technology B. V., Niederlande, bewettert. In Abhängigkeit von der Bewetterungszeit wurde der Glanzgrad nach Gardner (Tabelle 1) und die Farbänderung (Tabelle 2) ermittelt. Die Ergebnisse sind in den nachstehenden Tabellen 1 und 2 angegeben.

**Tabelle 1: Glanzgrad nach Gardner i Abhängigkeit von der Zeit**

| | 0 [h] | 500 [h] | 1000 [h] | 1500 [h] |
|---|---|---|---|---|
| Vergleich | 27 | 38 | 40 | 30 |
| Beispiel 2 | 38 | 35 | 37 | 35 |

In Bezug auf den Glanzgrad zeigte die mit der erfindungsgemäß verwendeten Stabilisatorzusammensetzung 2 stabilisierte Probe nach längerer Bewetterung einen besonderen Vorteil gegenüber der mit der Vergleichszusammensetzung stabilisierten Probe.

**Tabelle 2: Farbabstand ΔE - CIE in Abhängigkeit von der Zeit**

| | 200 [h] | 400 [h] | 600 [h] |
|---|---|---|---|
| Vergleich | 4,3 | 5,4 | 3,9 |
| Beispiel 1 | 4,2 | 2,3 | 1,2 |
| Beispiel 2 | 4,5 | 4,6 | 2,6 |

Wie man Tabelle 2 entnehmen kann, zeigten die mit den erfindungsgemäß verwendeten Stabilisatorzusammensetzungen stabilisierten Proben eine deutlich geringere Farbänderung als die mit der Vergleichszusammensetzung stabilisierte Probe.

## Patentansprüche

1. Verwendung einer Stabilisatorzusammensetzung zur Stabilisierung von Polyurethanen gegen die Einwirkung von Licht, Sauerstoff und Wärme, wobei die Stabilisatorzusammensetzung umfasst:
A) wenigstens einen 2-Cyan-3,3-diarylacrylsäureester der allgemeinen Formel 1, 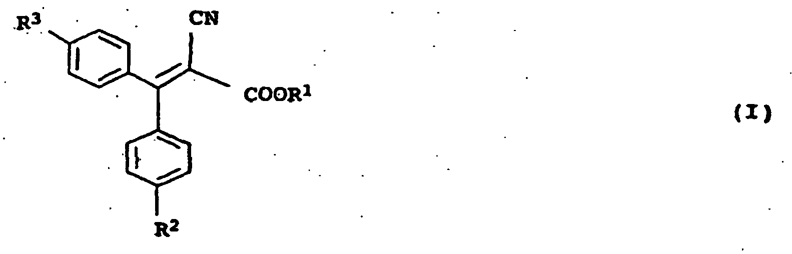
worin
R¹ für C₁- bis C₁₈-Alkyl, das gegebenenfalls durch ein oder mehrere Sauerstoffatome unterbrochen sein kann, oder C₃-C₉-Cycloalkyl, gegebenenfalls substituiert, steht und
R² und R³ unabhängig voneinander für Wasserstoff, C₁-C₁₂₋Alkyl, C₁-C₁₂-Alkoxy oder Di(C₁-C₄-alkylamino) stehen;
B) wenigstens ein Amin der allgemeinen Formel II, 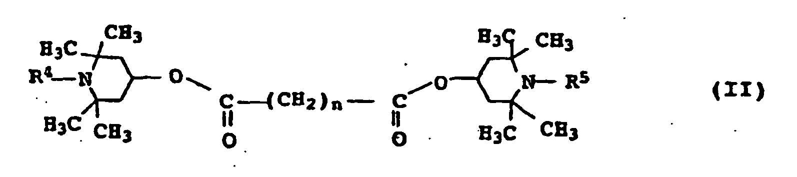
worin
R⁴ und R⁵ unabhängig voneinander für Wasserstoff, C₁-C₄₋Alkyl, C₁-C₁₂-Alkoxy stehen und
n für eine ganze Zahl von 2 bis 10 steht,
C) wenigstens ein Phenol der Formel III, 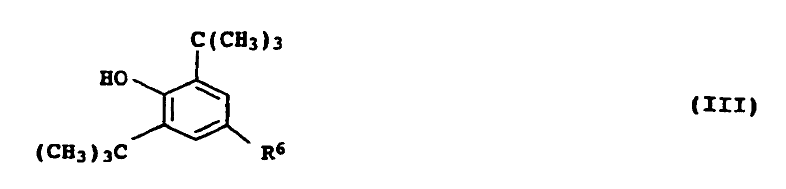
worin
R⁶ für C₁-C₂₀-Alkoxycarbonyl-C₁-C₆-alkyl steht,
D) gegebenenfalls wenigstens ein Chromanderivat der Formel IV, 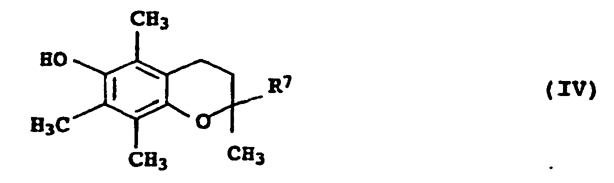
in der R⁷ für eine Gruppe der Formel 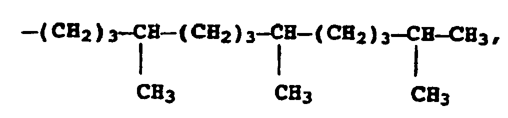 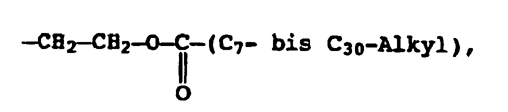
-CH₂CH₂-S-(C₁- bis C₃₀-Alkyl) oder 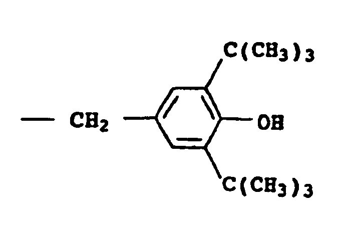
steht und
E) gegebenenfalls wenigstens ein organisches Phosphit und/oder Phosphonit.

2. Verwendung nach Anspruch 1, worin die Komponente A) 2-Ethylhexyl-2-cyan-3,3-diphenylacrylat ist.

3. Verwendung nach Anspruch 1 oder 2, wobei die Komponente B) Bis-(1,2,2,6,6-pentamethylpiperidin-4-yl)sebacat ist.

4. Verwendung nach einem der vorherigen Ansprüche, wobei es sich bei der Komponente C) um 3-(3,5-Di-tert.-butyl-4-hydroxyphenyl)propionsäure-i-octylester handelt.

5. Verwendung nach einem der vorherigen Ansprüche, wobei es sich bei der Komponente D) um α-Tocopherol handelt.

6. Verwendung nach einem der vorherigen Ansprüche, wobei es sich bei der Komponente E) um Tris(nonylphenyl)phosphit handelt.

7. Verwendung nach einem der vorhergehenden Ansprüche zur Stabilisierung von thermoplastischen Polyurethanen.

8. Thermoplastisches Polyurethan, umfassend wenigstens eine Stabilisatorzusammensetzung gemäß Definition in einem der Ansprüche 1 bis 6.

## Claims

1. The use of a stabilizer composition for stabilizing polyurethanes with respect to exposure to light, oxygen, and heat, the stabilizer composition comprising:
A) at least one 2-cyano-3,3-diarylacrylate of the formula I, 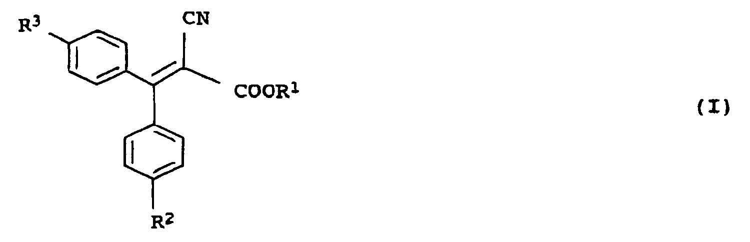
where
R¹ is C₁-C₁₈-alkyl which, if appropriate, may have interruption by one or more oxygen atoms, or is C₃-C₈-cycloalkyl, optionally substituted, and
R² and R³, independently of one another, are hydrogen, C₁-C₁₂-alkyl, C₁-C₁₂-alkoxy or di(C₁-C₄-alkylamino);
B) at least one amine of the formula II 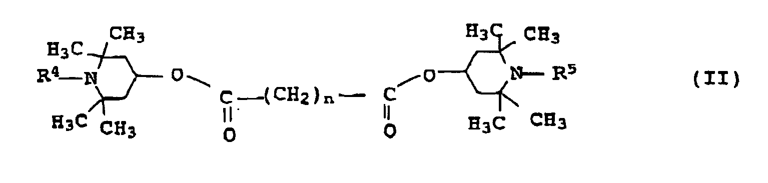
where
R⁴ and R⁵, independently of one another, are hydrogen, C₁-C₄-alkyl, or C₁-C₁₂-alkoxy, and
n is an integer from 2 to 10,
C) at least one phenol of the formula III 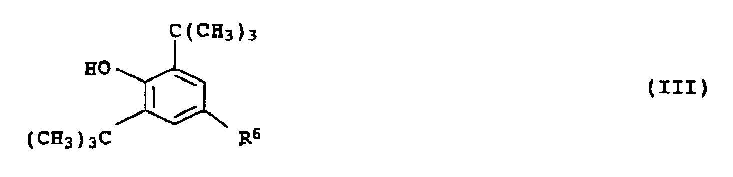
where
R⁶ is C₁-C₂₀-alkoxycarbonyl-C₁-C₆-alkyl,
D) if appropriate, at least one chromane derivative of the formula IV 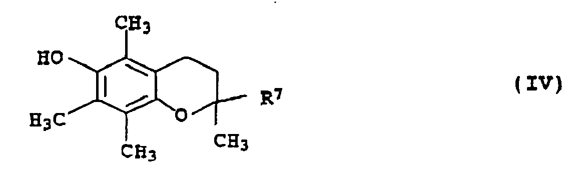
where R⁷ is a group of the formula 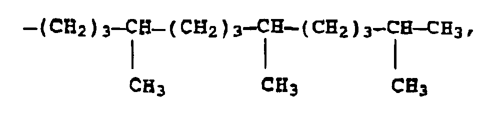 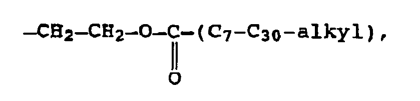
-CH₂CH₂-S-(C₁-C₃₀-alkyl), or 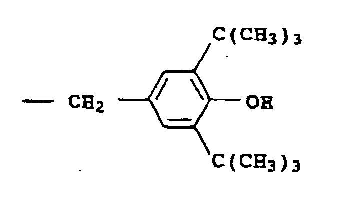
and
E) if appropriate, at least one organic phosphite and/or phosphonite.

2. The use according to claim 1, where component A) is 2-ethylhexyl 2-cyano-3,3-diphenylacrylate.

3. The use according to claim 1 or 2, where component B) is bis-(1,2,2,6,6-pentamethylpiperidin-4-yl) sebacate.

4. The use according to any of the preceding claims, where component C) is isooctyl 3-(3,5-di-tert-butyl-4-hydroxyphenyl)propionate.

5. The use according to any of the preceding claims, where component D) is α-tocopherol.

6. The use according to any of the preceding claims, where component E) is tris(nonylphenyl) phosphite.

7. The use according to any of the preceding claims for stabilizing thermoplastic polyurethanes.

8. A thermoplastic polyurethane comprising at least one stabilizer composition as defined in any of claims 1 to 6.

## Revendications

1. Utilisation d'une composition stabilisatrice pour stabiliser des polyuréthannes contre l'action de la lumière, de l'oxygène et de la chaleur, dans laquelle la composition stabilisatrice comporte :
A) au moins un ester d'acide 2-cyano-3,3-diarylacrylique de la formule générale 1 ; 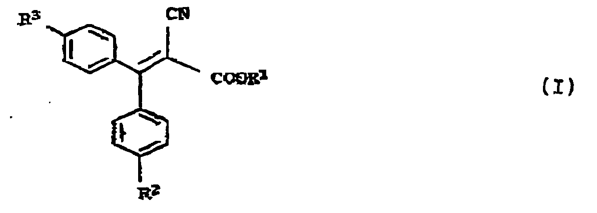
dans laquelle
R¹ représente un groupe alkyle en C₁-C₁₈, qui peut éventuellement être interrompu par un ou plusieurs atomes d'oxygène, ou un groupe cycloalkyle en C₃-C_{H}, éventuellement substitué, et
R² et R³ représentent, indépendamment l'un de l'autre, de l'hydrogène ou un groupe alkyle en C₁-C₁₂, alcoxy en C₁-C₁₂ ou di (C₁-C₄-alkylamino),
B) au moins une amine de la formule générale II : 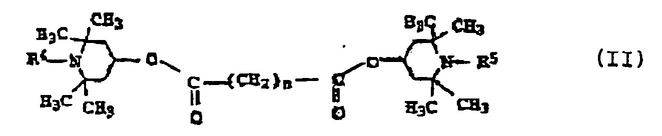
dans laquelle
R⁴ et R⁵ représentent, indépendamment l'un de l'autre, de l'hydrogène ou un groupe alkyle en C₁-C₄ ou alcoxy en C₁-C₁₂, et
n est un nombre entier de 2 à 10,
C) au moins un phénol de la formule III: 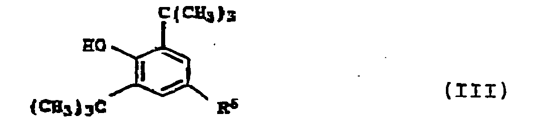
dans laquelle
R⁶ représente un groupe C₁-C₂₀-alcoxycarbonyl-C₁-C₆-alkyle,
D) éventuellement au moins un dérivé de chromane de la formule IV : 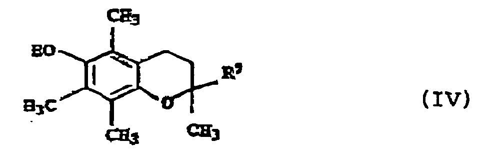
dans laquelle R⁷ représente un groupe de la formule : 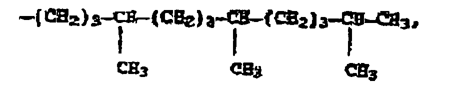 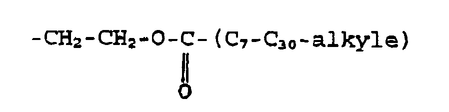
-CH₂-CH₂-S- (C₁-C₃₀-alkyle) ou 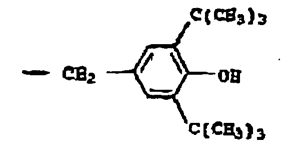
et
E) éventuellement au moins un phosphonite et/ou phosphite organique.

2. Utilisation suivant la revendication 1, dans laquelle le composant A) est de l'acrylate de 2-éthylhexyl-2-cyano-3,3-diphényle.

3. Utilisation suivant la revendication 1 ou 2, dans laquelle le composant B) est du sébaçate de bis-(1, 2, 2, 6, 6 -pentaméthylpipéridin-4 -yle).

4. Utilisation suivant l'une des revendications précédentes, dans laquelle, pour ce qui concerne le composant C), il s'agit de 3-(3,5-di-tert-butyl-4-hydroxyphényl)propionate de i-octyle,

5. Utilisation suivant l'une des revendications précédentes, dans laquelle, pour ce qui concerne le composant D), il s'agit d'α-tocophérol.

6. Utilisation suivant l'une des revendications précédentes, dans laquelle, pour ce qui concerne le composant E), il s'agit de phosphite de tris-(nonylphényle) .

7. Utilisation suivant l'une des revendications précédentes, pour la stabilisation de polyuréthannes thermoplastiques.

8. Polyuréthanne thermoplastique, comportant au moins une composition stabilisatrice selon la définition de l'une des revendications 1 à 6.
